# EUROPEAN PATENT APPLICATION

(11) **EP 4 435 481 A1**
(43) Date of publication of application: **25.09.2024**
(21) Application number: 22895456.6
(22) Date of filing: 04.11.2022
(51) Int. Cl.: G02B 6/02, C03B 37/028, G02B 6/036, G02B 6/04

(54) **MULTICORE FIBER AND METHOD FOR MANUFACTURING SAME**

(30) Priority: 17.11.2021 JP 2021186985
(71) Applicant: Furukawa Electric Co., Ltd., Tokyo 100-8322 (JP)
(72) Inventor: MUKASA, Kazunori, Tokyo 100-8322 (JP)
(74) Representative: SSM Sandmair
(86) International application number: PCT/JP2022/041219
(87) International publication number: WO 2023/090174

(57) **Abstract**

A multicore fiber includes multiple first linear portions that include a first core portion and a first cladding portion having a refractive index lower than a maximum refractive index of the first core portion and surrounding an outer periphery of the first core portion, and a first tubular portion. The first linear portions are respectively joined to an inner wall of the first tubular portion, and two of the first linear portions are not in contact with each other on a first virtual line connecting centers of the two of the first core portions included in two of the first linear portions on a cross-section perpendicular to the longitudinal direction, at least in a portion in a longitudinal direction.

## Description

### Field

The present invention relates to a multicore fiber and its manufacturing method of the same.

### Background

For multicore fibers having multiple core regions, a structure in which a hole structure is arranged between the core regions to suppress crosstalk between cores has been known (Non-Patent Literature 1, 2). Moreover, a multicore fiber in which crosstalk between cores is suppressed without arranging a hole structure has also been known (Non-Patent Literature 3).

### Citation List

### Non Patent Literature

Non-Patent Literature 1: K. Saito et al. "Multi-core hole-assisted fibers for high core density space division multiplexing", OECC 2010, 7C2-1 (2010)
Non-Patent Literature 2: B. Yao et al. "Reduction of Crosstalk by Hole-Walled Multi-Core Fiber", OFC 2012, paper OM2D.5 (2012).
Non-Patent Literature 3: Yusuke Sasaki et al. "Connection Loss Characteristics of Small MFD Multi-Core Fibers Using Thermal Diffusion Core Technology", IEICE Technical Report, OCS2018-88, OPE2018-204 (2019-02).

### Summary

### Technical Problem

However, the multicore fibers described in Non-Patent Literatures 1, 2 have a problem that a special method, such as perforation and capillary stacking, is necessary during the manufacturing process to arrange a substantially circular hole between the core regions. Moreover, the multicore fiber described in Non-Patent Literature 3 has a problem that a mode field diameter or an effective core area is to be relatively small.

The present invention has been achieved in view of the above challenges, and it is an object of the present invention to provide a multicore fiber in which crosstalk between cores is suppressed and a manufacturing method of the same.

### Solution to Problem

To solve the above-described problem and achieve the object, a multicore fiber according to one aspect of the present invention includes: a plurality of first linear portions including a first core portion, and a first cladding portion having a refractive index lower than a maximum refractive index of the first core portion, the first cladding portion surrounding an outer periphery of the first core portion; and a first tubular portion, wherein the first linear portions are respectively joined to an inner wall of the first tubular portion, and two of the first linear portions are not in contact with each other in at least a portion in a longitudinal direction on a first virtual line connecting centers of two of the first core portions included in the two of the first linear portions, on a cross-section perpendicular to the longitudinal direction.

A region in which the first linear portion may not be present in an interior of the first tubular portion on a cross-section perpendicular to the longitudinal direction is a void.

Two of the first linear portions may not be in contact with each other in at least a portion in the longitudinal direction in a region sandwiched between two second virtual lines connecting ends of two center cores of the two of the first core portions included in the two of the first linear portions on a cross-section perpendicular to the longitudinal direction

A refractive index profile formed by the first core portion and the first cladding portion may be either one of a step-index type, a staircase type, a W-shape type, and a trench type.

The first core portion may be configured to propagate light having a wavelength of 1550 nm in a single mode.

A cutoff wavelength of the first core portion may be 1530 nm or shorter.

A mode filed diameter of the first core portion at a wavelength of 1550 nm may be 7 µm or larger.

Inter-core crosstalk per 1 km of length at a wavelength of 1550 nm may be -10 dB or smaller.

A distance between two of the first linear portions may be 1.5 µm or larger.

The multicore fiber may further include a second linear portion including: a second core portion arranged on a center side with respect to the first linear portion; and a second cladding portion having a refractive index lower than a maximum refractive index of the second core portion, the second cladding portion surrounding an outer periphery of the second core portion.

A region in which the first linear portion and the second linear portion may not be present in an interior of the first tubular portion on a cross-section perpendicular to the longitudinal direction is a void.

The second core portion may be a different type of core in which a propagation refractive index is different from that of the first core portion.

A refractive index profile formed by the first core portion and the first cladding portion may be a step-index type, and a refractive index profile formed by the second core portion and the second cladding portion may be either one of a staircase type, a W-shape type, and a trench type.

The multicore fiber may further include: a plurality of third portions arranged on a center side with respect to the first linear portion, and including a third core portion, and a third cladding portion having a refractive index lower than a maximum refractive index of the third core portion, the third cladding portion surrounding an outer periphery of the third core portion; and a second tubular portion arranged on the center side with respect to the first linear portion, wherein the third linear portions are respectively joined to an inner wall of the second tubular portion, two of the third linear portions are not in contact with each other at least in a portion in the longitudinal direction on a third virtual line connecting centers of two of the third core portions included in the two of the third linear portions on a cross-section perpendicular to the longitudinal direction.

The multicore fiber may further include: a third tubular portion arranged between the first linear portion and the second tubular portion; and a supporting portion configured to support the second tubular portion and the third tubular portion in a separated state from each other.

The supporting portion may be arranged at a position off a fourth virtual line connecting one piece of the first linear portion and the third linear portion closest to the one piece of the first linear portion, on a cross-section perpendicular to the longitudinal direction.

The third core portion may be positioned between two of the first core portions in a circumferential direction.

The third core portion may be a different type of core having a propagation refractive index different from that of the first core portion.

A center core of the first core portion may be made of silica glass containing a dopant to increase a refractive index, and the first cladding portion is made of silica glass containing substantially no dopant except for chlorine.

A center core of the first core portion may be made of silica glass that contains substantially no dopant except for chlorine, and the first cladding portion is made of silica glass including a dopant to decrease a refractive index.

A manufacturing method of a multicore fiber according to one aspect of the present invention includes: a first preparing step of preparing a plurality of first cylindrical preforms each including a first preform core-portion, a first preform cladding-portion having a refractive index lower than a maximum refractive index of the first preform core-portion, the first preform cladding-portion surrounding an outer periphery of the first preform core-portion; a second preparing step of preparing a first tubular preform; an arranging step of forming an optical fiber preform by arranging the first cylindrical preforms on an inner wall of the first tubular preform in a separated manner from each other; and a drawing step of drawing a multicore fiber from the optical fiber preform.

The manufacturing method may further include a supporting step of supporting the first cylindrical preforms in an aligned state with a supporting jig.

The manufacturing method may further includes: a third preparing step of preparing a second cylindrical preform including a second preform core-portion, and a second preform cladding-portion having a refractive index lower than a maximum refractive index of the second preform core-portion, the second preform cladding-portion surrounding an outer periphery of the second preform core-portion; and a joining step of joining the second cylindrical preform to at least either one of the first cylindrical preforms.

### Advantageous Effects of Invention

According to the present invention, an effect of realizing a multicore fiber in which crosstalk between cores is suppressed is achieved.

### Brief Description of Drawings

FIG. 1 is a schematic cross-section on a plane perpendicular to a longitudinal direction of a multicore fiber according to a first embodiment.
FIG. 2 is a diagram illustrating an example of a relationship between λcc and inter-core crosstalk with respect to a minimum distance G.
FIG. 3A is a diagram illustrating Example 1 of a manufacturing method of a multicore fiber according to the first embodiment.
FIG. 3B is a diagram illustrating Example 1 of the manufacturing method of the multicore fiber according to the first embodiment.
FIG. 3C is a diagram illustrating Example 1 of the manufacturing method of the multicore fiber according to the first embodiment.
FIG. 4 is a diagram illustrating Example 2 of the manufacturing method of the multicore fiber according to the first embodiment.
FIG. 5 is a schematic cross-section on a plane perpendicular to a longitudinal direction of a multicore fiber according to a second embodiment.
FIG. 6 is a schematic cross-section on a plane perpendicular to a longitudinal direction of a multicore fiber according to a third embodiment.
FIG. 7 is a schematic cross-section on a plane perpendicular to a longitudinal direction of a multicore fiber according to a fourth embodiment.
FIG. 8 is an explanatory diagram illustrating a step-index type refractive index profile.
FIG. 9 is an explanatory diagram illustrating a trench-type refractive index profile.

### Description of Embodiments

Hereinafter, embodiments of the present invention will be explained in detail with reference to the drawings. The embodiments explained below are not intended to limit the present invention. Moreover, in the respective drawings, identical reference signs are appropriately assigned to identical or corresponding components, and duplicated explanation will be omitted as appropriate. Furthermore, in the present application, cut-off wavelength or effective cut-off wavelength refers to cable cut-off wavelength (λcc) defined by the International Telecommunication Union (ITU) in ITU-T G.650.1. Moreover, for terms not specifically defined in the present specification, definitions and measurement methods in G.650.1 and G.650.2 apply.

### First Embodiment

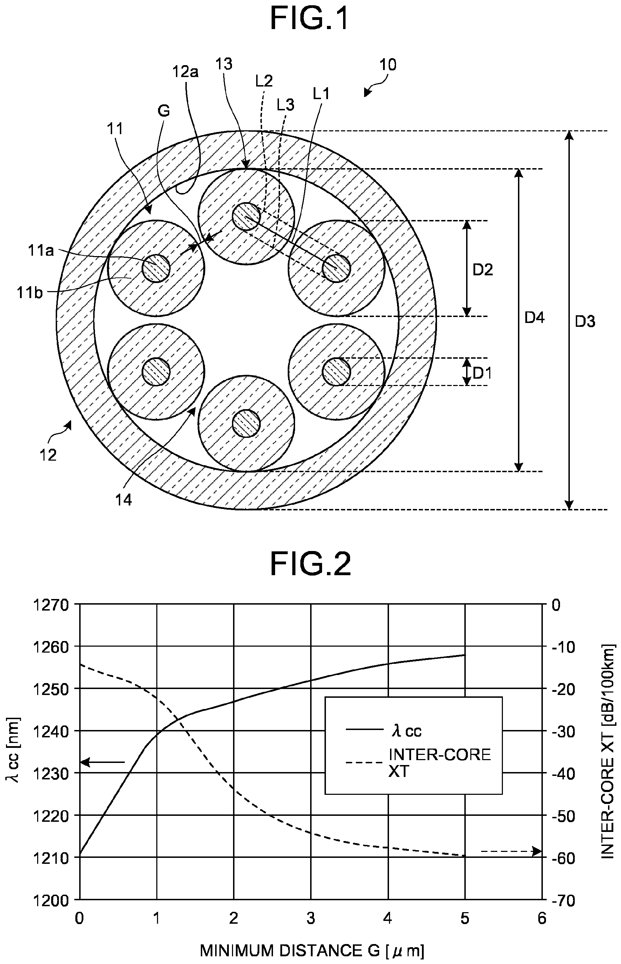

FIG. 1 is a schematic cross-section on a plane perpendicular to a longitudinal direction of a multicore fiber according to a first embodiment. A multicore fiber 10 is used as, for example, an optical transmission line in optical communications. The multicore fiber 10 is made of silica glass, and includes six first linear portions 11 and one first tubular portion 12. The six first linear portions 11 are one example of multiple first linear portions.

Each of the first linear portion 11 has a linear shape, and includes a first core portion 11a, and a first cladding portion 11b that has a refractive index lower than a maximum refractive index of the first core portion 11a, and that surrounds an outer periphery of the first core portion 11a.

A diameter of the respective first core portions 11a is D1, and an outer diameter of the respective first cladding portions 11b is D2.

A refractive index profile of the first core portion 11a and the first cladding portion 11b is preferable to be a refractive index profile with a center core having maximum refractive index, and is, for example, either one of a step-index type, a staircase-type, W-shape type, and a trench-type. In the case of these refractive index profiles, an optical field propagating though the first core portion 11a is confined in a center core.

In a step-index type refractive index profile, the entirety of the first core portion 11a can be defined as a center core. Moreover, in the staircase type refractive index, the first core portion 11a is constituted of a center core and an intermediate layer that surrounds an outer periphery of the center core and that has a higher refractive index than the first cladding portion 11b. Furthermore, in the W-shape type refractive index profile, the first core portion 11a is constituted of a center core, and a depressed layer that surrounds an outer periphery of the center core and that has a lower refractive index than the first cladding portion 11b. Moreover, in the trench type refractive index profile, the first core portion 11a is constituted of a center core, an intermediate layer that surrounds a outer periphery of the center core and that has a refractive index equivalent to the first cladding portion 11b, and a trench layer that surrounds an outer periphery of the intermediate layer, and that has a refractive index lower than the first cladding portion 11b.

For example, the center core of the first core portion 11a is made of silica glass containing a dopant to increase the refractive index. The dopant to increase the refractive index is, for example, germanium. Moreover, the first cladding portion 11b is made of silica glass that contains substantially no dopant, except for chlorine. Chlorine is a dopant that is contained in a manufacturing process of the multicore fiber 10, and is not added intentionally. According to such a configuration, a dopant that reduces the refractive index but is relatively expensive, such as fluorine, is not used, or is used in a relatively small amount and, therefore, cost reduction can be expected.

Furthermore, the center core of the first core portion 11a may be made of silica glass that contains substantially no dopant except for chlorine. Moreover, the first cladding portion 11b may be made of silica glass that contains a dopant to reduce the refractive index. The dopant to reduce the refractive index is, for example, fluorine. According to such a configuration, a dopant that increases the refractive index but increases transmission losses, such as germanium is not used, or is used in a relatively small amount and, therefore, low transmission loss can be expected to be achieved.

Moreover, the intermediate layer, the depressed layer, and the trench layer of the first core portion 11a are made of silica glass containing germanium or fluorine as a dopant, or the like.

The first tubular portion 12 has a tubular shape in which an outer diameter is D3 and an inner diameter is D4, and has an inner wall 12a. The first tubular portion 12 is made of, for example, silica-based glass, but may be made of silica-based glass same as the first cladding portion 11b.

In the first embodiment, on a cross-section perpendicular to a longitudinal direction, a region in which the first linear portion is not present in an interior of the first tubular portion 12 is a void.

Each of the first linear portion 11 is joined to the inner wall 12a of the first tubular portion 12 by a joining portion 13 along its longitudinal direction. Moreover, the first linear portions 11 adjacent to each other are separated from each other by a gap 14.

With this arrangement, when a first virtual line L1 connecting centers of the two first core portions 11a included in the two first linear portions 11 is drawn, a state in which these two first linear portions are not in contact with each other on the first virtual line L1 and the gap 14 is present therebetween is realized. Furthermore, when two second virtual lines L2, L3 connecting ends of center cores of the two first core portions 11a included in the two first linear portions 11 are drawn, a state in which these two first linear portions 11 are not in contact with each other in a region sandwiched between the two second virtual lines L2, L3, but the gap 14 is present therebetween is realized. The end of the center core represents a position at which the refractive index difference of the center core with respect to the first cladding portion 11b is so small close to 0 in a diameter direction of the first core portion 11a.

In this multicore fiber 10, these two first linear portions 11 are not in contact with each other on the first virtual line L1, and having the gap 14 therebetween suppresses an interference of optical fields between the two first core portions 11a included in the two first linear portions 11. As a result, crosstalk between the two first core portions 11a, that is, inter-core crosstalk between is suppressed. Furthermore, in a region sandwiched between the two second virtual lines L2, L3, these two first linear portions 11 are not in contact with each other, and having the gap 14 therebetween further suppresses inter-core crosstalk between the two first core portions 11a.

FIG. 2 is a diagram illustrating an example of a relationship between λcc and inter-core crosstalk with respect to a minimum distance G. The minimum distance G represents the minimum value of a distance between the two first linear portions 11 as illustrated in FIG. 1. FIG. 2 is a simulation calculation result when the refractive index profile of the first core portion 11a and the first cladding portion 11b is the step-index type, a relative refractive index difference Δ1 of the maximum refractive index of the first core portion 11a with respect to the refractive index of the first cladding portion 11b is 0.37%, and a core diameter (D1 in FIG. 1) is 9 µm. Moreover, inter-core cross talk (XT) in FIG. 2 is a value per length of 100 km at a wavelength of 1550 nm.

As illustrated in FIG. 2, the inter-core XT decreases as the minimum distance G increases. In the case of the multicore fiber 10, one example of preferable inter-core XT is -10 dB or less per a length of 1 km at a wavelength of 1550 nm, and a preferable example for long distance transmission is -10 dB or less per length of 100 km at a wavelength of 1550 nm. Therefore, in the example illustrated in FIG. 2, it is acceptable if the minimum distance G is larger than 0 µm, but it is preferable that the minimum distance G be, for example, 1.5 µm because the inter-core XT sharply decreases. That is, it is preferable that a distance between the two first linear portions 11 be 1.5 µm or more.

Furthermore, as illustrated in FIG. 2, even when the minimum distance G becomes large, increase of λcc is relatively gentle. It is conceivable that the reason is because, light in higher order modes among propagation modes of the first core portion 11a can leak into the first tubular portion 12 through the joining portion 13.

In the first embodiment, the gap 14 is present between the two first linear portions 11 throughout the entire length of the multicore fiber 10. However, the gap 14 may be arranged not throughout the entire length of the multicore fiber 10. That is, it is sufficient that the two first linear portions 11 are not in contact with each other on the first virtual line L1 at least in a portion in the longitudinal direction. For example, when the multicore fiber 10 is bent or twisted, the two first linear portions 11 can be in contact with each other in that bent or twisted portion. However, even if there is a portion in which the two first linear portions 11 are in contact with each other, the effect that inter-core crosstalk is suppressed can be obtained in a portion in which the two first linear portions 11 are not in contact with each other. Similarly, it is sufficient that as long as the two first linear portions 11 are not in contact with each other in at least a portion in the longitudinal direction also in the region sandwiched between the two second virtual lines L2, L3.

In the multicore fiber 10, it is preferable that the first core portion 11a propagate light having a wavelength of 1550 nm in a single mode, and that λcc of the first core portion 11a is equal to or smaller than 1530 nm. In the example illustrated in FIG. 2, λcc of the first core portion 11a is smaller than 1530 nm and smaller than 1260 nm, and it is preferable because the first core portion 11a can propagate light having a wavelength of 1550 nm in the single mode.

Moreover, when connectivity with a general-purpose single-mode optical fiber conforming to the definition in ITU-T (For example, G.652) or the like is considered, a mode field diameter (MFD) of the first core portion 11a at a wavelength of 1550 nm is preferable to be equal to or larger than 7 µm, preferable to be equal to or larger than 8 µm, and further preferable to be equal to or larger than 9 µm in the multicore fiber 10. In the example illustrated in FIG. 2, the MFD at a wavelength of 1550 nm is 9.8 µm to 10.2 µm and, therefore, the example in FIG. 2 is considered to be a preferable example from the viewpoint of the MFD also.

### Manufacturing Method

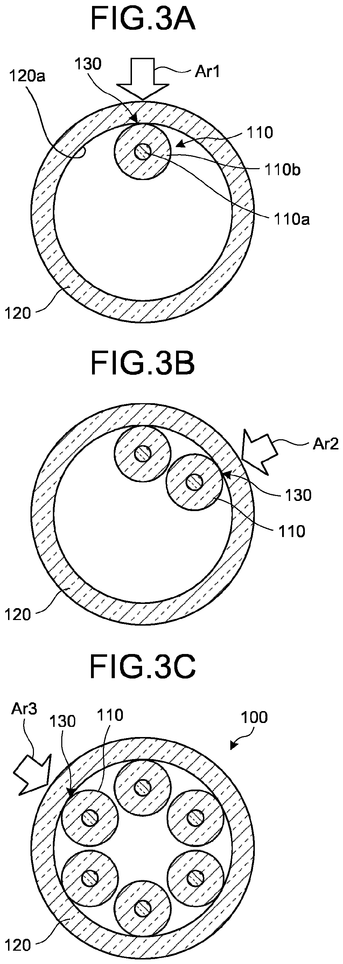

Example 1 of a manufacturing method of the multicore fiber 10 will be explained, referring to FIGS. 3A, 3B, and 3C. First, six first cylindrical preforms 110 that include a first preform core-portion 110a, and a first preform cladding-portion 110b that has a refractive index lower than a maximum refractive index of the first preform core-portion 110a and that surrounds an outer periphery of the first preform core-portion 110a are prepared (one example of a first preparing process). The first cylindrical preform 110 can be manufactured by using, for example, a publicly known vapor-phase axial deposition (VAD) method, modified chemical vapor deposition (MCVD) method, or the like. The six first cylindrical preforms 110 are one example of a plurality of first cylindrical preforms. Moreover, one first tubular preform 120 in a tubular shape is prepared (one example of a second preparing step).

The first cylindrical preform 110 is a material to be the first linear portion of the multicore fiber 10. The first preform core-portion 110a is a portion to be the first core portion 11a of the multicore fiber 10. The first preform cladding-portion 110b is a portion to be the first cladding portion 11b of the multicore fiber 10. The first tubular preform 120 is a member to be the first tubular portion 12 of the multicore fiber 10.

Subsequently, the six first cylindrical preforms 110 are arranged separated from each other on an inner wall 120a of the first tubular preform 120 and are joined thereto, to form an optical fiber preform 100 (one example of an arranging step).

For example, first, as illustrated in FIG. 3A, the first piece of the first cylindrical preform 110 is inserted in the first tubular preform 120 and is abutted on the inner wall 120a, and by heating a portion indicated by a narrow Ar1 with a hydrogen burner or the like from outside of the first tubular preform 120, the first cylindrical preform 110 and the first tubular preform 120 are thermally bonded at a joining portion 130. Subsequently, as illustrated in FIG. 3B, the second piece of the first cylindrical preform 110 is inserted in the first tubular preform 120 and is abutted on the inner wall 120a in a separated state from the first piece of the first cylindrical preform 110, and by heating a position indicated by an arrow Ar2 with a hydrogen burner or the like from outside of the first tubular preform 120, the first cylindrical preform 110 and the first tubular preform 120 are thermally bonded at the joining portion 130. Thereafter, in a similar manner, the third to the fifth pieces of the first cylindrical preforms 110 are thermally bonded to the first tubular preform 120 sequentially, and finally, the sixth piece of the first cylindrical preform 110 and the first tubular preform 120 are thermally bonded at the joining portion 130 as illustrated in FIG. 3C, to form the optical fiber preform 100. Bonding of the first cylindrical preform 110 and the first tubular preform 120 may be performed in at least a portion in the longitudinal direction.

Subsequently, by using a publicly known drawing apparatus, the multicore fiber 10 is drawn from the optical fiber preform 100 (one example of a drawing step). In this case, it is preferable that the gap in the optical fiber preform 100 be pressurized so that the shapes of the first cylindrical preform 110 and the first tubular preform 120 are not excessively deformed.

According to Example 1 of the manufacturing method, the gap 14 can be formed between the first core portions 11a easily compared to the conventional perforation and capillary stacking, which are special methods. For example, a complicated step, such as perforating holes in a glass material in the perforation, and arranging a capillary between two core portions in the capillary stacking, is involved, but in the manufacturing method described above, such a complicated step is not necessary. In addition, because no holes are bored, there is no waste of glass material, and because the gap 14 is relatively large, there is also an advantage that an amount of a glass material to be used itself is less.

In Example 1 of the manufacturing method described above, six pieces of the first cylindrical preforms 110 are inserted in the first tubular preform 120, but six pieces of the first cylindrical preforms 110 may be aligned and the inserted in the first tubular preform 120 at a time.

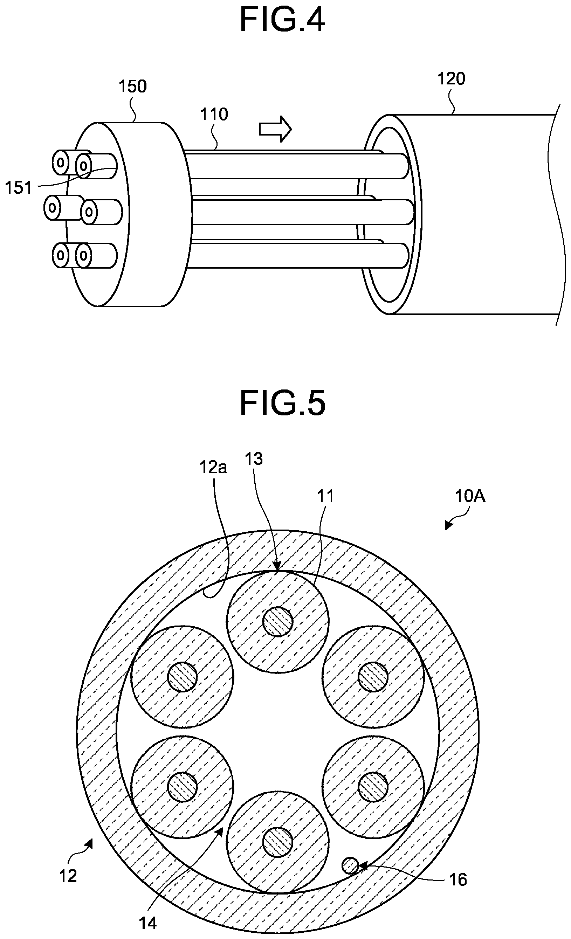

FIG. 4 is a diagram illustrating Example 2 of the manufacturing method of the multicore fiber according to the first embodiment. In Example 2 of the manufacturing method, the first preparing step and the second preparing step are performed in a similar manner to Example 1.

Subsequently, a supporting jig 150 is prepared. The supporting jig 150 is a disc-shaped member in which six holes 151 in which the six pieces of the first cylindrical preforms 110 can be inserted are arranged. The supporting jig 150 is for example, made of silica-based glass.

Subsequently, inserting the first cylindrical preforms 110 in the respective holes 151 of the supporting jig 150, the first cylindrical preforms 110 are supported by the supporting jig 150 (one example of a supporting step). In this case, the six pieces of the first cylindrical preforms 110 are supported in a separated state from one another, and are supported in an aligned state to have a positional relationship that becomes appropriate when bonded to the first tubular preform 120. the first cylindrical preforms 110 may be bonded to the supporting jig 150 by applying heat or the like. Moreover, it may be configured such that the first cylindrical preforms 110 do not come off from the supporting jig 150 by forming the first cylindrical preform 110 such that an outer diameter of an upper end portion is larger than an inner diameter of the hole 151. When the first cylindrical preforms 110 are bonded to the supporting jig 150, or when the outer diameter of the upper end portion of the first cylindrical preforms 110 is formed thicker than the inner diameter of the hole 151, a positional relationship of the six pieces of the first cylindrical preforms 110 relative to one another becomes stable. Furthermore, when a thickness of the supporting jig 150 is relatively thick, the positional relationship of the six pieces of the first cylindrical preforms 110 relative to one another becomes further stable.

Subsequently, while supporting the six pieces of the first cylindrical preforms 110 with the supporting jig 150 in an aligned state, the aligned six pieces of the first cylindrical preforms 110 are inserted in the first tubular preform 120. Thus, the six pieces of the first cylindrical preforms 110 are arranged on the inner wall of the first tubular preform 120 in a separated state from one another (one example of an arranging step).

Subsequently, the inserted six pieces of the first cylindrical preforms 110 are joined to the inner wall 120a of the first tubular preform 120, to form the optical fiber preform. The joining can be performed sequentially by thermal bonding similarly to Example 1. The supporting jig 150 may be removed after the joining. Moreover, when the first cylindrical preforms 110 are joined to the supporting jig 150, or when the outer diameter of the upper end portion of the first cylindrical preforms 110 is formed thicker than the inner diameter of the hole 151, the process of joining the first cylindrical preforms 110 to the inner wall 120a of the first tubular preform 120 may be omitted.

Subsequently, similarly to Example 1, the multicore fiber 10 is drawn from the optical fiber preform. When the process of joining the first cylindrical preforms 110 to the inner wall 120a of the first tubular preform 120 is omitted, the first cylindrical preforms 110 and the first tubular preform 120 are joined by heat applied at the time of this drawing. When the first cylindrical preforms 110 are joined to the supporting jig 150, or when the outer diameter of the upper end portion of the first cylindrical preforms 110 is formed thicker than the inner diameter of the hole 151, even if the process of joining the first cylindrical preforms 110 to the inner wall 120a of the first tubular preform 120 is omitted, it is possible to prevent the first cylindrical preforms 110 from being drawn in priority.

The holes 151 are arranged in the supporting jig 150, but a supporting jig in which notches are arranged in place of the holes 151 may be used. That is, the supporting jig 150 only needs a structure of supporting the first cylindrical preforms 110 at appropriate positions.

### Second Embodiment

FIG. 5 is a schematic cross-section on a plane perpendicular to the longitudinal direction of a multicore fiber according to a second embodiment. A multicore fiber 10A has a configuration in which a marker 16 is added to the configuration of the multicore fiber 10.

The marker 16 has a linear shape, and abuts on the inner wall 12a of a first tubular portion along its longitudinal direction. The marker 16 is made of, for example, silica-based glass. The refractive index of the marker 16 is not particularly limited, but is different from, for example, the refractive index of the first tubular portion 12 and the refractive index of the first cladding portion 11b.

In the multicore fiber 10A, the respective positions of the six pieces of the first core portions 11a are easy to be identified based on a positional relationship with the marker 16.

The marker 16 can be formed, for example, by preparing a cylindrical preform to be the marker 16 in Example 1 and Example 2 of the manufacturing method of the multicore fiber 10, and by joining that on the inner wall 120a of the first tubular preform 120.

### Third Embodiment

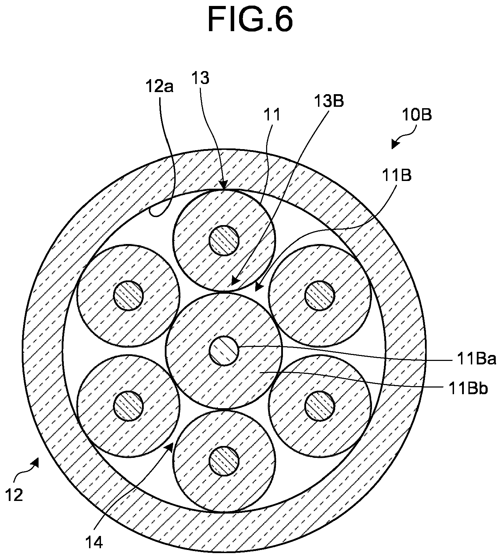

FIG. 6 is a schematic cross-section on a plane perpendicular to the longitudinal direction of a multicore fiber according to a third embodiment. A multicore fiber 10B has a configuration in which one piece of second linear portion 11B is added to the configuration of the multicore fiber 10.

The second linear portion 11B is arranged on a center side of the multicore fiber 10 with respect to the six pieces of the first linear portions 11. The second linear portion 11B includes a second core portion 11Ba and a second cladding portion 11Bb that has a relative index lower than a maximum relative index of the second core portion 11Ba and that surrounds an outer periphery of the second core portion 11Ba.

A refractive index profile formed by the second core portion 11Ba and the second cladding portion 11Bb is preferable to be a refractive index profile with a center core having the maximum refractive index, and is, for example, either one of the step-index type, the staircase type, the W-shape type, and the trench type.

Moreover, for example, the center core of the second core portion 11Ba is made of silica glass containing a dopant to increase the refractive index. The dopant to increase the refractive index is, for example, germanium. Moreover, the second cladding portion 11Bb is made of silica glass that includes substantially no dopant, except for chlorine.

Furthermore, the center core of the second core portion 11Ba may be made of silica glass that includes substantially no dopant, except for chlorine. Moreover, the second cladding portion 11Bb may be made of silica glass containing a dopant to decrease the refractive index. The dopant to decrease the refractive index is, for example, fluorine.

In the third embodiment, on a cross-section perpendicular to the longitudinal direction, a region in which the first linear portion 11 and the second linear portion 11B are not present is a void in an interior of the first tubular portion 12.

The second linear portion 11B is joined to at least either one of the six pieces of the first linear portions 11 at a joining portion 13B. In the present invention, the second linear portion 11B is joined to all of the six pieces of the first linear portions 11 at the joining portion 13B.

In this case, the second cladding portion 11Bb and the first cladding portion 11b are joined between the second core portion 11Ba of the second linear portion 11B and the first core portion 11a of the first linear portion 11, and there is a case in which the gap 14 is not present. Therefore, there is a case in which the inter-core XT between the second core portion 11Ba and the first core portion 11a is not suppressed, or suppression is small. Accordingly, the second core portion 11Ba is preferable to be a different type of core having a propagation refractive index different from that of the first core portion 11a. When the propagation refractive indexes differ between the second core portion 11Ba and the first core portion 11a, the inter-core XT is suppressed.

In the third embodiment also, the gap 14 is present between the two first linear portions 11 throughout the entire length of the multicore fiber 10A, but the gap 14 may be arranged not throughout the entire length of the multicore fiber 10A. That is, it is sufficient that the two first linear portions 11 are not in contact with each other on the first virtual line L1 at least in a portion in the longitudinal direction. Moreover, it is preferable that the two first linear portions 11 be not in contact with each other in at least a portion in the longitudinal direction in the region sandwiched between the two second virtual lines.

Furthermore, if the refractive index profile formed by the first core portion 11a and the first cladding portion 11b and the refractive index profile formed by the second core portion 11Ba and the second cladding portion 11Bb differ from each other, it is possible to make the propagation refractive indexes differ from each other easily, and it is easy to increase the refractive index difference. For example, the refractive index profile formed by the first core portion 11a and the first cladding portion 11b is the step-index type, and the refractive index profile formed by the second core portion 11Ba and the second cladding portion 11Bb may be either one of the staircase type, the W-shape type, and the trench type. The refractive index profile formed by the second core portion 11Ba and the second cladding portion 11Bb is preferable to be the trench type from the viewpoint of simultaneous achievement of suppressing the inter-core XT and enlarging the mode field diameter.

The multicore fiber 10B can be manufactured by, for example, a method similar to Example 1 or Example 2 of the manufacturing method of the multicore fiber 10.

To manufacture it similarly to Example 1, for example, a second cylindrical preform that includes a second preform core-portion and a second cladding portion that has a refractive index lower than a maximum refractive index of the second preform core-portion, and that surrounds an outer periphery of the second preform core-portion is prepared (one example of a third preparing step) .

The second cylindrical preform is a member to be the second linear portion 11B of the multicore fiber 10B. The second preform core-portion is a portion to be the second core portion 11Ba of the multicore fiber 10B. The second preform cladding-portion is a portion to be the second cladding portion 11Bb of the multicore fiber 10B.

Thereafter, to at least either one of the six pieces of the first cylindrical preforms 110, the second cylindrical preform is joined (one example of a joining step). This joining step may be performed after all of the six pieces of the first cylindrical preform 110 are joined to the first tubular preform 120. Moreover, this joining step may be performed after the second cylindrical preform is inserted in the first tubular preform 120 first, or may be performed prior to inserting the second cylindrical preforms in the first tubular preform 120.

To manufacture it similarly to Example 2, in place of the supporting jig 150, the supporting step may be performed by using a supporting jig capable of supporting the six pieces of the first cylindrical preforms 110 and the one piece of the second cylindrical preform. Alternatively, removing the supporting jig 150 after the six pieces of the first cylindrical preforms 110 are joined to the first tubular preform 120 by using the supporting jig 150, and inserting the second cylindrical preform among the six pieces of the first cylindrical preforms 110, at least either one of the six pieces of the first cylindrical preforms 110 may be joined to the second cylindrical preform.

In the third embodiment, the second linear portion 11B may be replaced with a linear portion that does not have the first core portion 11a, and is constituted of a uniform glass material throughout. The presence of such a linear component makes it easy to sustain the structure of the first linear portion 11 and the first tubular portion 12 of the multicore fiber.

### Fourth Embodiment

In the multicore fiber according to the present invention, the linear portions may have a multilayer structure in the diameter direction. A fourth embodiment explained below is a multicore fiber in which the linear portions have a two-layer structure.

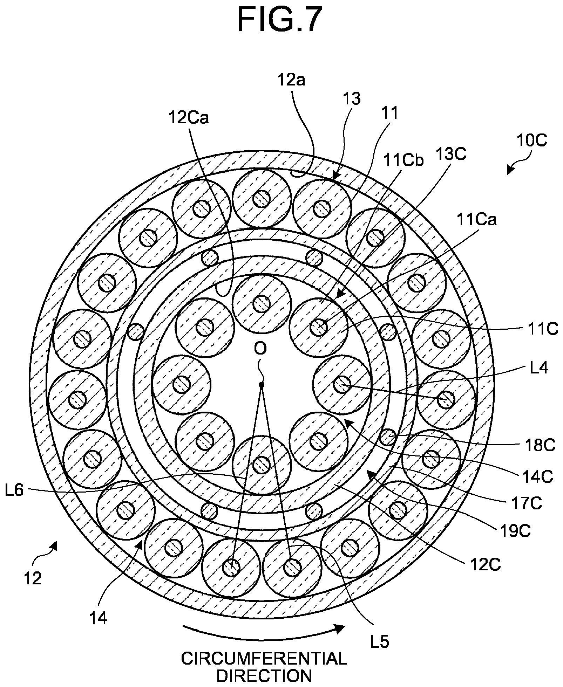

FIG. 7 is a schematic cross-section on a plane perpendicular to the longitudinal direction of the multicore fiber according to the fourth embodiment. The multicore fiber 10C has a structure in which the number of the first linear portions 11 is increased to 19, and 8 pieces of third linear portions 11C, 1 piece of second tubular portion 12C, 1 piece of third tubular portion 17C, and 7 pieces of supporting portions 18C are further added to the configuration of the multicore fiber 10. Eight pieces of the third linear portions 11C are one example of a plurality of third linear portions.

The third linear portions 11C are arranged on a center side with respect to the first linear portions 11. The respective third linear portions 11C has a linear shape, and includes a third core portion 11Ca, and a third cladding portion 11Cb that has a refractive index lower than a maximum refractive index of the third core portion 11Ca and that surrounds an outer periphery of the third core portion 11Ca.

The respective third linear portions 11C have an identical structure. For example, core diameters of the respective third core portions 11Ca are equal to one another, and cladding diameters of the respective third cladding portions 11Cb are equal to one another.

A refractive index profile formed by the third core portion 11Ca and the third cladding portion 11Cb is preferable to be a refractive index profile with a center core having a maximum refractive index, and is, for example, either one of the step-index type, the staircase type, the W-shape type, and the trench type.

For example, the center core of the third core portion 11Ca is made of silica glass containing a dopant to increase the refractive index. The dopant to increase the refractive index is, for example, germanium. Moreover, the third cladding portion 11Cb is made of silica glass that contains substantially no dopant, except for chlorine.

Furthermore, the center core of the third core portion 11Ca may be made of silica glass that contains substantially no dopant, except for chlorine. Moreover, the third cladding portion 11Cb may be made of silica glass that contains a dopant to reduce the refractive index.

The second tubular portion 12C is arranged on the center side with respect to the first linear portion 11. The second tubular portion 12C has a tubular shape, and has an inner wall 12Ca. The second tubular portion 12C is made of, for example, silica-based glass, and may be made of silica-based glass same as that of the third cladding portion 11Cb.

In the fourth embodiment, on a cross-section perpendicular to the longitudinal direction, a region in which the first linear portion 11, the third linear portion 11C, the second tubular portion 12C, the third tubular portion 17C, and the supporting portion 18C are not present is a void in the interior of the first tubular portion 12.

Each of the third linear portion 11C is joined to the inner wall 12Ca of the second tubular portion at a joining portion 13C along its longitudinal direction. Moreover, the third linear portions 11C adjacent to each other are separated from each other by a gap 14C.

With this arrangement, when a third virtual line connecting centers of the two third core portions 11Ca included in the two third linear portions 11C is drawn, a state in which these two third linear portions 11C are not in contact with each other on the third virtual line and the gap 14C is present therebetween is realized. Furthermore, when two virtual lines connecting ends of center cores of the two third core portions 11Ca included in the two third linear portions 11C are drawn, a state in which these two third linear portions 11C are not in contact with each other in a region between the two virtual lines, but the gap 14C is present therebetween is realized.

The third tubular portion 17C is a tubular portion arranged between the first linear portion 11 and the second tubular portion 12C. The third tubular portion 17C is made of, for example, silica-based glass, and may be made of silica-based glass same as that of the third cladding portion 11Cb. The third tubular portion 17C is joined to at least one of the first linear portions 11.

The supporting portion 18C is joined to the second tubular portion 12C and the third tubular portion 17C, and supports the second tubular portion 12C and the third tubular portion 17C in a separated manner from each other. The third tubular portion 17C is made of, for example, silica-based glass, and may be made of silica-based glass same as that of the third cladding portion 11Cb.

In the multicore fiber 10C, similarly to the multicore fiber 10, inter-core crosstalk between the two first core portions 11a is suppressed, and inter-core crosstalk between the two third core portions 11Ca is also suppressed.

Moreover, because the second tubular portion 12C and the third tubular portion 17C are maintained in a separated state from each other by the supporting portion 18, a gap 19C is formed between the second tubular portion 12C and the third tubular portion 17C. As a result, inter-core crosstalk between the first core portion 11a and the third core portion 11Ca is suppressed.

Furthermore, even when the minimum value of a distance between the two third linear portions 11C becomes large, increase of λcc is relatively gentle. It is conceivable that the reason is because, light in higher order modes among propagation modes of the third core portion 11Ca can leak into the second tubular portion 12C through the joining portion 13C.

Moreover, as illustrated in FIG. 7, on a plane perpendicular to the longitudinal direction, it is preferable that the supporting portion 18C be arranged at a position off a fourth virtual line L4 connecting the one first linear portion 11 and the third linear portion closest to this one first linear portion 11. This enables to further suppress inter-core crosstalk between the first linear portion 11 and the third linear portion 11C that are connected by the fourth virtual line L4.

Furthermore, as illustrated in FIG. 7, it is preferable that the third core portion 11Ca be positioned between the two first core portions 11a on a circumferential direction from the viewpoint of suppressing inter-core crosstalk between the first linear portion 11 and the third linear portion 11C. Being positioned between the two first core portions 11a in the circumferential direction means that the third core portion 11Ca is positioned between two virtual lines L5, L6 connecting respective centers of the two first core portions 11a adjacent to each other in the circumferential direction and a center O of the multicore fiber 10C on a plane perpendicular to the longitudinal direction.

Also in the fourth embodiment, the gap 14 is present between the two first linear portions 11 throughout the entire length of the multicore fiber 10C. Moreover, the gap 14C is present between the two third linear portions 11C throughout the entire length of the multicore fiber 10C. However, the gaps 14, 14C may be arranged not throughout the entire length of the multicore fiber 10C. That is, it is sufficient that the two first linear portions 11 are not in contact with each other on the first virtual line at least in a portion in the longitudinal direction. Moreover, it is more preferable that the two first linear portions 11 be not in contact with each other in at least a portion in the longitudinal direction in the region sandwiched between the two second virtual lines. Similarly, it is sufficient that the two third linear portions 11C are not in contact with each other in at least a portion in the longitudinal direction on the third virtual line. Moreover, it is more preferable that the two third linear portions 11C be not in contact with each other in at least in a portion in the longitudinal direction in the region sandwiched between the two second virtual lines defined similarly to the case of the first linear portion 11.

As a modification of the multicore fiber 10C according to the fourth embodiment, the third tubular portion 17C and the supporting portion 18C may be removed, the outer diameter of the second tubular portion 12C may be increased to eliminate the gap 19C, and it may be joined to at least one of the second tubular portion 12C and the first linear portion 11. In this case, it is more preferable that the third core portion 11Ca be positioned between the two first core portions 11a in the circumferential direction from the viewpoint of suppressing inter-core crosstalk between the first linear portion 11 and the third linear portion 11C. Moreover, it is preferable to make the thickness of the second tubular portion 12C relatively thick from the viewpoint of suppressing inter-core crosstalk between the first linear portion 11 and the third linear portion 11C.

Furthermore, the third core portion 11Ca is preferable to be a different type of core having a propagation refractive index different from that of the first core portion 11a from the viewpoint of suppressing inter-core crosstalk between the first core portion 11 and the third core portion 11C.

### First Example

A multicore fiber having the configuration of the multicore fiber 10A according to the second embodiment was manufactured by a manufacturing method similar to Example 2 described above. Specifically, first, six pieces of first cylindrical preforms having an outer diameter of 10.5 mm manufactured by using the VAD method were prepared. A refractive index profile of the first cylindrical preform was the step-index type. Moreover, a first preform core-portion was made of silica glass that contains germanium, and a first preform cladding-portion was made of silica glass that contains substantially no dopant, except for chlorine.

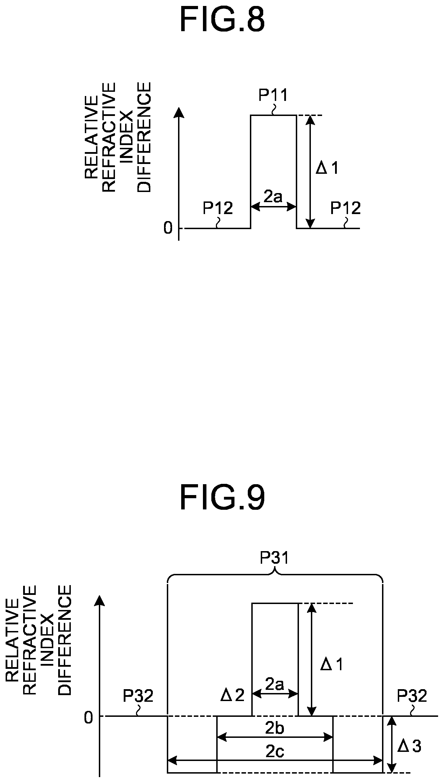

FIG. 8 is an explanatory diagram of a step-index type refractive index profile. In FIG. 8, a profile P11 indicates a refractive index profile of a core portion, and a profile P12 indicates a refractive index profile of a cladding portion. The step-index type refractive index profile can be represented by a core diameter 2a and a relative refractive-index difference Δ1 of a maximum relative refractive index of the core portion with respect to the refractive index of the cladding portion.

In the first cylindrical preform of the first example, Δ1 is set to 0.37%. Moreover, the core diameter was set such that a ratio of a cladding diameter to the core diameter is 3.5.

Subsequently, a first tubular preform that is made of pure silica glass having an outer diameter of 41.7 mm and an inner diameter of 33.3 mm was prepared. Pure silica glass is silica glass with significantly high purity, the refractive index of which at a wavelength of 1550 nm is approximately 1.444.

Furthermore, a marker preform to be a marker was prepared. The marker preform has a diameter of 1.7 mm, and was made of silica glass in which the refractive index was adjusted to obtain a refractive index difference with respect to the refractive index of pure silica glass is -0.2%.

Subsequently, a supporting jig was prepared as illustrated in FIG. 4, and the first cylindrical preforms were inserted in respective holes of the supporting jig, to support the first cylindrical preforms with the supporting jig. While maintaining the state in which the six pieces of the first cylindrical preforms were aligned with the supporting jig, the aligned six pieces of the first cylindrical preforms were inserted in the first tubular preform.

Subsequently, the inserted six pieces of the first cylindrical preforms were joined to the inner wall of the first tubular preform by a hydrogen burner. Thereafter, the supporting jig was removed, and the marker preform was joined to the inner wall of the first tubular portion, to form an optical fiber preform.

Subsequently, by using a drawing apparatus, the multicore fiber of the first example was drawn from the optical fiber preform. At the time of drawing, in addition to adjustment of drawing conditions, it was optimized by performing pressure control to prevent excessive deformation of the shape.

The manufactured multicore fiber of the first example had the core diameter of 9 µm, the cladding diameter of 31.5 µm, the outer diameter of the first tubular portion of 125 µm, and the inner diameter of 100 µm. Moreover, the minimum value of distance between the two first linear portions was 2.5 µm in average.

Next, optical characteristics of the multicore fiber of the first example were measured. At the optical measurement, input of light to the respective first core portions of the multicore fiber was performed by using a space coupling system. The results are provided in Table 1. In Table 1, Core Nos. 1 to 6 are numbers assigned sequentially in order of alignment in the circumferential direction to the first core portions of the first linear portions. Furthermore, "Aeff" indicates an effective core area. Moreover, Inter-Core XT represents inter-core crosstalk and, for example, "Between 1-2: -52.7" means that the inter-core cross talk between the first core portion of Core No. 1 and the first core portion of Core No. 2 is -52.7 dB.

As indicated in Table 1, in the respective core portions, desirable characteristics were obtained in all of transmission loss, MFD, Aeff, λcc, and inter-core crosstalk. Particularly, even though the multicore fiber had many voids thereinside, sufficiently low values were obtained as λcc. Moreover, even though Aeff was 80 µm and the refractive index profile was the step-index type, a significantly low inter-core XT of -50 dB or lower was obtained between respective cores. Furthermore, because the cladding diameter was 31.5 µm and was sufficiently large compared to the core diameter of 9 µm, influence of an outer surface condition of the cladding portion on transmission loss was small, and the transmission losses also showed sufficiently low values. Other optical characteristics, such as wavelength dispersion characteristics of the respective first core portions, were also favorable characteristics that meet ITU-T specifications (for example, G.652 or G.657).

**Table 1**

| Core No. | Transmission Loss | MFD | Aeff | λcc | Inter-Core XT |
|---|---|---|---|---|---|
| | [dB/km] | [µm] @1550nm | [µm²] @1550nm | [nm] @22m | [dB @100km] @1550nm |
| 1 | 0.187 | 10.1 | 80.3 | 1256 | Between 1-2: -52.7 |
| 2 | 0.188 | 10.2 | 80.5 | 1258 | Between 2-3: -53.6 |
| 3 | 0.186 | 10.1 | 80.1 | 1254 | Between 3-4: -51.4 |
| 4 | 0.187 | 10.0 | 80.0 | 1252 | Between 4-5: -52.3 |
| 5 | 0.189 | 10.2 | 80.6 | 1258 | Between 5-6: -51.3 |
| 6 | 0.188 | 10.2 | 80.7 | 1257 | Between 6-1: -54.1 |

### Second Example

A multicore fiber having a configuration in which a marker was added to the configuration of the multicore fiber 10B according to the third embodiment was manufactured by a manufacturing method similar to Example 1 described above. Specifically, first, six pieces of first cylindrical preforms having an outer diameter of 10.7 mm manufactured by using the VAD method were prepared. A refractive index profile of the first cylindrical preform was the step-index type. Moreover, a first preform core-portion was made of silica glass that contains germanium, and a first preform cladding-portion was made of silica glass that contains substantially no dopant, except for chlorine.

In the first cylindrical preform of the first example, Δ1 is set to 0.36%. Moreover, it was set such that a ratio of a cladding diameter to the core diameter is 3.2.

Subsequently, a second tubular preform having an outer diameter of 12 mm manufactured by using the VAD method was prepared. A refractive index profile of the second tubular preform was trench type. Moreover, in the first preform core-portion, a center core was made of silica glass containing germanium, a intermediate layer was made of silica glass that contains substantially no dopant except for chlorine, and a trench layer was made of silica glass containing fluorine. The first preform cladding-portion was made of silica glass that contains substantially no dopant except for chlorine.

FIG. 9 is an explanatory diagram of a trench type refractive index profile. In FIG. 9, a profile P31 indicates a refractive index profile of the core portion, and a profile P32 indicates a refractive index profile of the cladding portion. The step-index type refractive index profile can be represented by a core diameter 2a, a relative refractive-index difference Δ1 of a maximum relative refractive index of a center core with respect to the refractive index of the cladding portion, a relative refractive-index difference Δ2 of a refractive index of the intermediate layer with respect to the refractive index of the cladding portion, an inner diameter 2b of the trench layer, an outer diameter 2c of the trench layer, and a relative refractive index difference Δ3 of a refractive index of the trench layer with respect to the cladding portion.

In the second cylindrical preform of the second example, Δ1 was set to 0.36%, Δ2 was set to 0%, Δ3 was set to -0.4%, b/a was set to 1.5, and c/a was set to 2.0. Moreover, it was set such that a ratio of a cladding diameter to the core diameter was 4.

Subsequently, a first tubular preform that is made of pure silica glass having an outer diameter of 41.7 mm and an inner diameter of 33.3 mm was prepared.

Furthermore, a marker preform to be a marker was prepared.

Subsequently, a supporting jig was prepared as illustrated in FIG. 4, and the first cylindrical preforms were inserted in respective holes of the supporting jig, to support the first cylindrical preforms with the supporting jig. While maintaining the state in which the six pieces of the first cylindrical preforms were aligned with the supporting jig, the aligned six pieces of the first cylindrical preforms were inserted in the first tubular preform.

Subsequently, the inserted six pieces of the first cylindrical preforms were joined to an inner wall of the first tubular preform by a hydrogen burner. Thereafter, the supporting jig was removed, and the marker preform was joined to the inner wall of the first tubular portion by a hydrogen burner. Furthermore, the second cylindrical preform was joined to one of the first cylindrical preform by a hydrogen burner, to form an optical fiber preform.

Subsequently, by using a drawing apparatus, the multicore fiber of the second example was drawn from the optical fiber preform. At the time of drawing, in addition to adjustment of drawing conditions, it was optimized by performing pressure control to prevent excessive deformation of the shape.

In the manufactured multicore fiber of the second example, the core diameter of the first linear portion was 10 µm, the cladding diameter was 32 µm, the outer diameter of the first tubular portion was 125 µm, and the inner diameter was 100 µm. Moreover, the minimum value of distance between the two first linear portions was 2 µm in average.

Next, optical characteristics of the multicore fiber of the second example were measured. The results are provided in Table 2. In Table 2, Core Nos. 1 to 6 are numbers assigned sequentially in order of alignment in the circumferential direction to the first core portions of the first linear portions, and No. 7 is a number assigned to the second core portion of the second linear portion.

As indicated in Table 2, in the respective first core portions and the second core portion, desirable characteristics were obtained in all of transmission loss, MFD, Aeff, λcc, and inter-core crosstalk. Moreover, as for the first core portion, even though Aeff was approximately 89 µm² or larger, and the refractive index profile was the step-index type, a significantly low inter-core XT of -50 dB or lower was obtained between respective cores of No. 1 to 6. Furthermore, also between cores of No. 1 to 6 and No. 7, a sufficiently low inter-core XT of -30 dB or lower was obtained. Moreover, because the cladding diameter was 32 µm and was sufficiently large compared to the core diameter of 10 µm, influence of an outer surface condition of the cladding portion on transmission loss was small, and the transmission losses also showed sufficiently low values. Other optical characteristics, such as wavelength dispersion characteristics of the respective first core portions, were also favorable characteristics that meet ITU-T specifications (for example, G.654). Furthermore, other optical characteristics, such as wavelength dispersion characteristics of the second core portion, were also favorable characteristics that meet ITU-T specifications (for example, G.652 or G.657).

**Table 2**

| Core No. | Transmission Loss | MFD | Aeff | λcc | Inter-Core XT |
|---|---|---|---|---|---|
| | [dB/km] | [µm] @1550nm | [µm²] @1550nm | [nm] @22m | [dB @100km] @1550nm |
| 1 | 0.187 | 10.6 | 89.3 | 1375 | Between 1-2: -50.7 |
| | | | | | Between 1-7: -32.8 |
| 2 | 0.186 | 10.7 | 89.9 | 1388 | Between 2-3: -51.6 |
| | | | | | Between 2-7: -31.5 |
| 3 | 0.188 | 10.5 | 89.1 | 1354 | Between 3-4: -50.4 |
| | | | | | Between 3-7: -33.9 |
| 4 | 0.186 | 10.7 | 90.0 | 1392 | Between 4-5: -52.3 |
| | | | | | Between 4-7: -30.8 |
| 5 | 0.186 | 10.6 | 89.6 | 1380 | Between 5-6: -51.3 |
| | | | | | Between 5-7: -34.1 |
| 6 | 0.184 | 10.6 | 89.7 | 1377 | Between 6-1: -52.1 |
| | | | | | Between 6-7: -31.8 |
| 7 | 0.187 | 9.5 | 73.2 | 1201 | |

### Third Example

A multicore fiber in which the number of the first linear portions is eight in the configuration of the multicore fiber 10A according to the second embodiment was manufactured by a manufacturing method similar to Example 1. In the third example, eight pieces of first cylindrical preforms having an outer diameter of 8.3 mm manufactured by using the VAD method were prepared. Moreover, in the first cylindrical preform of the third example, Δ1 was set to 0.39%. Moreover, the core diameter was set such that a ratio of a cladding diameter to the core diameter was 2.9. Furthermore, in the third example, a first tubular preform made of pure silica glass having an outer diameter of 141.7 mm, and an inner diameter of 31.7 mm was prepared.

In the manufactured multicore fiber of the third example, the core diameter was 8.5 µm, the cladding diameter was 25 µm, the outer diameter of the first tubular portion was 125 µm, and the inner diameter was 95 µm. Moreover, the minimum value of distance between the two first linear portions was 2.5 µm in average.

Next, optical characteristics of the multicore fiber of the third example were measured. The results are provided in Table 3. In Table 3, Core Nos. 1 to 8 are numbers assigned sequentially in order of alignment in the circumferential direction to the first core portions of the first linear portions.

As indicated in Table 3, in the respective first core portions, desirable characteristics were obtained in all of transmission loss, MFD, Aeff, λcc, and inter-core crosstalk. Moreover, even though Aeff was approximately 75 µm², and the refractive index profile was the step-index type, a significantly low inter-core XT of -47 dB or lower was obtained between respective cores. Moreover, because the cladding diameter was 25 µm and was sufficiently large compared to the core diameter of 8.5 µm, influence of an outer surface condition of the cladding portion on transmission loss was small, and the transmission losses also showed sufficiently low values. Other optical characteristics, such as wavelength dispersion characteristics of the respective first core portions, were also favorable characteristics that meet ITU-T specifications (for example, G.652 or G.657).

**Table 3**

| Core No. | Transmission Loss | MFD | Aeff | λcc | Inter-Core XT |
|---|---|---|---|---|---|
| | [dB/km] | [µm] @1550nm | [µm²] @1550nm | [nm] @22m | [dB @100km] @1550nm |
| 1 | 0.188 | 9.7 | 74.3 | 1213 | Between 1-2: -48.7 |
| 2 | 0.187 | 9.8 | 76.5 | 1238 | Between 2-3: -50.6 |
| 3 | 0.187 | 9.6 | 73.8 | 1204 | Between 3-4: -49.5 |
| 4 | 0.187 | 9.8 | 77.0 | 1232 | Between 4-5: -47.3 |
| 5 | 0.188 | 9.7 | 75.6 | 1228 | Between 5-6: -50.3 |
| 6 | 0.190 | 9.8 | 77.6 | 1237 | Between 6-7: -48.1 |
| 7 | 0.187 | 9.8 | 77.3 | 1233 | Between 7-8: -49.9 |
| 8 | 0.186 | 9.6 | 73.8 | 1210 | Between 8-1: -47.7 |

### Fourth Example

A multicore fiber in which the number of the first linear portions is eight in the configuration of the multicore fiber according to the second example was manufactured by a manufacturing method similar to the third example. In a fourth example, eight pieces of first cylindrical preforms having an outer diameter of 8.3 mm manufactured by using the VAD method were prepared. Moreover, in the first cylindrical preform of the third example, Δ1 was set to 0.40%. Moreover, the core diameter was set such that a ratio of a cladding diameter to the core diameter was 3.1. Furthermore, in the fourth example, one second cylindrical preform having an outer diameter of 15 mm manufactured by using the VAD method was prepared. Moreover, in the second cylindrical preform of the fourth example, Δ1 was set to 0.36%, Δ2 was set to 0%, Δ3 was set to -0.6%, b/a was set to 2.0, and c/a was set to 3.0. Moreover, it was set such that a ratio of a cladding diameter to the core diameter was 5.6. Furthermore, in the fourth example, a first tubular preform that was made of pure silica glass having an outer diameter of 41.7 mm and an inner diameter of 31.7 mm was prepared.

In the manufactured multicore fiber of the fourth example, the core diameter was 8 µm, the cladding diameter was 25 µm, the outer diameter of the first tubular portion was 125 µm, and the inner diameter was 95 µm. Moreover, the minimum value of distance between the two first linear portions was 2.5 µm in average.

Next, optical characteristics of the multicore fiber of the fourth example were measured. The results are provided in Table 4. In Table 4, Core Nos. 1 to 8 are numbers assigned sequentially in order of alignment in the circumferential direction to the first core portions of the first linear portions, and Core No. 9. is a number assigned to a second core portion of the second linear portion.

As indicated in Table 4, in the respective first core portions, desirable characteristics were obtained in all of transmission loss, MFD, Aeff, λcc, and inter-core crosstalk. Moreover, even though Aeff was 70 µm² or larger, and the refractive index profile was the step-index type, a significantly low inter-core XT of -55 dB or lower was obtained between respective cores of No. 1 to 8. Furthermore, between cores of Nos. 1 to 8 and No. 9 also, a sufficiently low inter-core XT of -32 dB or lower was obtained. Moreover, because the cladding diameter was 25 µm and was sufficiently large compared to the core diameter of 8 µm, influence of an outer surface condition of the cladding portion on transmission loss was small, and the transmission losses also showed sufficiently low values. Furthermore, other optical characteristics, such as wavelength dispersion characteristics of the respective first core portions, were also favorable characteristics that meet ITU-T specifications (for example, G.652 or G.657) .

**Table 4**

| Core No. | Transmission Loss | MFD | Aeff | λcc | Inter-Core XT |
|---|---|---|---|---|---|
| | [dB/km] | [µm] @1550nm | [µm2] @ 1550nm | [nm] @22m | [dB @100km] @1550nm |
| 1 | 0.189 | 9.6 | 70.6 | 1123 | Between 1-2: -54.7 |
| | | | | | Between 1-9: -33.9 |
| 2 | 0.191 | 9.7 | 71.5 | 1138 | Between 2-3: -56.6 |
| | | | | | Between 2-9: -34.8 |
| 3 | 0.188 | 9.6 | 70.8 | 1124 | Between 3-4: -55.5 |
| | | | | | Between 3-9: -32.5 |
| 4 | 0.187 | 9.5 | 70.1 | 1102 | Between 4-5: -56.1 |
| | | | | | Between 4-9: -36.2 |
| 5 | 0.188 | 9.7 | 71.6 | 1144 | Between 5-6: -55.6 |
| | | | | | Between 5-9: -35.1 |
| 6 | 0.190 | 9.6 | 71.0 | 1127 | Between 6-7: -54.8 |
| | | | | | Between 6-9: -34.6 |
| 7 | 0.186 | 9.8 | 77.3 | 1233 | Between 7-8: -55.7 |
| | | | | | Between 7-9: -34.8 |
| 8 | 0.187 | 9.6 | 73.8 | 1210 | Between 8-1: -57.1 |
| | | | | | Between 8-9: -35.5 |
| 9 | 0.187 | 9.4 | 70.2 | 1252 | |

Moreover, connection loss characteristics, such as micro-bent loss characteristics, were investigated by using the multicore fiber of the fourth example, and optical fibers with excellent characteristics comparable to those of general-purpose single-mode optical fibers were obtained. Moreover, machine characteristics were also investigated by screening using the multicore fiber of the fourth example, and it was confirmed that they have a sufficient strength. Furthermore, the multicore fiber of the fourth example has no problems in other reliability characteristics. In the multicore fiber of the fourth example, no significant changes in the structure in the longitudinal direction were observed.

The embodiments described above are not intended to limit the present invention. Those configured by combining of the respective components described above are also included in the present invention. Moreover, further effects and modifications can be readily inferred by those skilled in the art. Therefore, a wider aspect of the present invention is not limited to the embodiments described above, and various alterations are applicable.

### Industrial Applicability

As described above, the present invention is suitable to be used for an optical fiber used, for example, as an optical transmission line.

### Reference Signs List

10, 10A, 10B, 10C MULTICORE FIBER
11 FIRST LINEAR PORTION
11a FIRST CORE PORTION
11b FIRST CLADDING PORTION
11B SECOND LINEAR PORTION
11Ba SECOND CORE PORTION
11Bb SECOND CLADDING PORTION
11C THIRD LINEAR PORTION
11Ca THIRD CORE PORTION
11Cb THIRD CLADDING PORTION
12 FIRST TUBULAR PORTION
12C SECOND TUBULAR PORTION
12a, 12Ca, 120a INNER WALL
13, 13B, 13C JOINING PORTION
14, 14C, 19C GAP
16 MARKER
17C THIRD TUBULAR PORTION
18C SUPPORTING PORTION
100 OPTICAL FIBER PREFORM
110 FIRST CYLINDRICAL PREFORM
110a FIRST PREFORM CORE-PORTION
110b FIRST PREFORM CLADDING-PORTION
120 FIRST TUBULAR PREFORM
130 JOINING PORTION
150 SUPPORTING JIG
151 HOLE
Ar1, Ar2 ARROW
L1 FIRST VIRTUAL LINE
L2 SECOND VIRTUAL LINE
L3 SECOND VIRTUAL LINE
L4 FOURTH VIRTUAL LINE
L5, L6 VIRTUAL LINE
O CENTER
P11, P12 PROFILE
P31, P32 PROFILE

## Claims

1. A multicore fiber comprising:
a plurality of first linear portions including
a first core portion, and
a first cladding portion having a refractive index lower than a maximum refractive index of the first core portion, the first cladding portion surrounding an outer periphery of the first core portion; and
a first tubular portion, wherein
the first linear portions are respectively joined to an inner wall of the first tubular portion, and
two of the first linear portions are not in contact with each other in at least a portion in a longitudinal direction on a first virtual line connecting centers of two of the first core portions included in the two of the first linear portions, on a cross-section perpendicular to the longitudinal direction.

2. The multicore fiber according to claim 1, wherein
a region in which the first linear portion is not present in an interior of the first tubular portion on a cross-section perpendicular to the longitudinal direction is a void.

3. The multicore fiber according to claim 1, wherein
two of the first linear portions are not in contact with each other in at least a portion in the longitudinal direction in a region sandwiched between two second virtual lines connecting ends of two center cores of the two of the first core portions included in the two of the first linear portions on a cross-section perpendicular to the longitudinal direction

4. The multicore fiber according to claim 1, wherein a refractive index profile formed by the first core portion and the first cladding portion is either one of a step-index type, a staircase type, a W-shape type, and a trench type.

5. The multicore fiber according to claim 1, wherein the first core portion is configured to propagate light having a wavelength of 1550 nm in a single mode.

6. The multicore fiber according to claim 1, wherein a cutoff wavelength of the first core portion is 1530 nm or shorter.

7. The multicore fiber according to claim 1, wherein a mode filed diameter of the first core portion at a wavelength of 1550 nm is 7 µm or larger.

8. The multicore fiber according to claim 1, wherein inter-core crosstalk per 1 km of length at a wavelength of 1550 nm is -10 dB or smaller.

9. The multicore fiber according to claim 1, wherein a distance between two of the first linear portions is 1.5 µm or larger.

10. The multicore fiber according to claim 1, further comprising a second linear portion including:
a second core portion arranged on a center side with respect to the first linear portion; and
a second cladding portion having a refractive index lower than a maximum refractive index of the second core portion, the second cladding portion surrounding an outer periphery of the second core portion.

11. The multicore fiber according to claim 10, wherein a region in which the first linear portion and the second linear portion are not present in an interior of the first tubular portion on a cross-section perpendicular to the longitudinal direction is a void.

12. The multicore fiber according to claim 10, wherein the second core portion is a different type of core in which a propagation refractive index is different from that of the first core portion.

13. The multicore fiber according to claim 10, wherein a refractive index profile formed by the first core portion and the first cladding portion is a step-index type, and a refractive index profile formed by the second core portion and the second cladding portion is either one of a staircase type, a W-shape type, and a trench type.

14. The multicore fiber according to any one of claims 1 to 11, further comprising:
a plurality of third portions arranged on a center side with respect to the first linear portion, and including
a third core portion, and
a third cladding portion having a refractive index lower than a maximum refractive index of the third core portion, the third cladding portion surrounding an outer periphery of the third core portion; and
a second tubular portion arranged on the center side with respect to the first linear portion, wherein
the third linear portions are respectively joined to an inner wall of the second tubular portion,
two of the third linear portions are not in contact with each other at least in a portion in the longitudinal direction on a third virtual line connecting centers of two of the third core portions included in the two of the third linear portions on a cross-section perpendicular to the longitudinal direction.

15. The multicore fiber according to claim 14, further comprising:
a third tubular portion arranged between the first linear portion and the second tubular portion; and
a supporting portion configured to support the second tubular portion and the third tubular portion in a separated state from each other.

16. The multicore fiber according to claim 15, wherein the supporting portion is arranged at a position off a fourth virtual line connecting one piece of the first linear portion and the third linear portion closest to the one piece of the first linear portion, on a cross-section perpendicular to the longitudinal direction.

17. The multicore fiber according to claim 14, wherein the third core portion is positioned between two of the first core portions in a circumferential direction.

18. The multicore fiber according to claim 14, wherein the third core portion is a different type of core having a propagation refractive index different from that of the first core portion.

19. The multicore fiber according to claim 1, wherein a center core of the first core portion is made of silica glass containing a dopant to increase a refractive index, and the first cladding portion is made of silica glass containing substantially no dopant except for chlorine.

20. The multicore fiber according to claim 1, wherein a center core of the first core portion is made of silica glass that contains substantially no dopant except for chlorine, and the first cladding portion is made of silica glass including a dopant to decrease a refractive index.

21. A manufacturing method of a multicore fiber comprising:
a first preparing step of preparing a plurality of first cylindrical preforms each including a first preform core-portion, a first preform cladding-portion having a refractive index lower than a maximum refractive index of the first preform core-portion, the first preform cladding-portion surrounding an outer periphery of the first preform core-portion;
a second preparing step of preparing a first tubular preform;
an arranging step of forming an optical fiber preform by arranging the first cylindrical preforms on an inner wall of the first tubular preform in a separated manner from each other; and
a drawing step of drawing a multicore fiber from the optical fiber preform.

22. The manufacturing method of a multicore fiber according to claim 21, further comprising
a supporting step of supporting the first cylindrical preforms in an aligned state with a supporting jig.

23. The manufacturing method according to claim 21, further comprising:
a third preparing step of preparing a second cylindrical preform including a second preform core-portion, and a second preform cladding-portion having a refractive index lower than a maximum refractive index of the second preform core-portion, the second preform cladding-portion surrounding an outer periphery of the second preform core-portion; and
a joining step of joining the second cylindrical preform to at least either one of the first cylindrical preforms.
